# EUROPÄISCHE PATENTANMELDUNG

(11) **EP 2 657 913 A1**
(43) Veröffentlichungstag der Anmeldung: **30.10.2013**
(21) Anmeldenummer: 12165372.9
(22) Anmeldetag: 24.04.2012
(51) Int. Cl.: G07B 15/02, G06Q 50/30

(54) **Verfahren zur automatischen Erfassung von Nutzungsinformationen**

(71) Anmelder: Scheidt & Bachmann GmbH, 41238 Mönchengladbach (DE)
(72) Erfinder: Miller, Norbert, Mönchengladbach (DE)
(74) Vertreter: Stenger, Watzke & Ring

(57) **Zusammenfassung**

Die Erfindung betrifft ein Verfahren zur automatischen Erfassung von Nutzungsinformationen betreffend die Nutzung eines Dienstleistungssystem durch einen Nutzer mit einem Nutzermedium, wobei das Dienstleistungssystem ein Funksignal mit Nutzungsinformationen aussendet und wobei eine auf dem Nutzermedium installierte Applikation das Funksignal erkennt, die Nutzungsinformationen aus dem Funksignal extrahiert und Nutzungsdaten an das Dienstleistungssystem zurückübermittelt.

## Beschreibung

Die Erfindung betrifft ein Verfahren zur automatischen Erfassung von Nutzungsinformationen betreffend die Nutzung eines Dienstleistungssystems durch einen Nutzer mit einem Nutzermedium.

Verfahren der angegebenen Art sind im Stand der Technik bekannt. Diese Verfahren dienen dazu, die Benutzung eines Dienstleistungssystems durch einen Nutzer automatisch zu erkennen. Insbesondere werden diese dort eingesetzt, wo eine große Anzahl von Nutzern das Dienstleistungssystem nutzt. Dies betrifft beispielsweise die Nutzung von öffentlichen Verkehrsmitteln, Parkhäusern, Mietwagen, Taxis, Fähren oder auch Car-Sharing-Modelle.

Damit das Dienstleistungssystem erkennt, dass sich ein bestimmter Nutzer innerhalb seiner Infrastruktur befindet, hat der Nutzer ein Nutzermedium mit sich zu führen. Sobald der Nutzer das Dienstleistungssystem betritt, erfolgt eine Registrierung der Nutzung, wobei die Nutzungsdauer vom Eintritt in das Dienstleistungssystem bis zum Austritt aus dem Dienstleistungssystem reicht. Diese Art der Erfassung von Dienstleistungen wird im Stand der Technik allgemein als Be-In/Be-Out-System bezeichnet. Dabei wird während der gesamten Nutzungsdauer ein Präsenzsignal des Nutzermediums erfasst. Sobald dieses Präsenzsignal ausbleibt, erkennt das Dienstleistungssystem das Verlassen des Systems durch das Nutzermedium.

Das Nutzermedium wird vom Nutzer mitgeführt und dient seiner Identifikation. Es empfängt die Nutzungsinformationen vom Dienstleistungssystem und sendet anschließend auf dieser Basis Nutzungsdaten zurück, welche unter anderem den Nutzungszeitpunkt enthalten. Das Dienstleistungssystem empfängt die Nutzungsdaten des Nutzermediums und erfasst, welcher Nutzer mit einem aktiven Nutzermedium zu welchem Zeitpunkt an welchem Ort für welche Dauer im System zugegen ist. Diese Daten werden an ein Hintergrundsystem übermittelt.

Vorteilhaft dabei ist, dass der Nutzer nicht mehr im Vorfeld jeder einzelnen Benutzung des Dienstleistungssystems eine Nutzungsberechtigung, beispielsweise in Form eines Tickets oder einer Berechtigungskarte, erwerben muss. Er erwirbt einmalig ein Nutzermedium, beispielsweise eine Chipkarte, welches automatisch bei Betreten des Dienstleistungssystems erfasst wird.

Dennoch ergibt sich Verbesserungsbedarf bei dem vorbeschriebenen Verfahren, da die bekannten Systeme spezielle Nutzermedien erfordern, welche ausschließlich in einem bestimmten Dienstleistungssystem Verwendung finden. Die Nutzermedien sind bisher speziell auf ein Dienstleistungssystem ausgerichtete Geräte, welcher der Nutzer mit sich führen muss, um die Dienstleistung nutzen zu können. Falls der Nutzer nun beispielsweise eine längere Reise unternimmt, bei welcher Dienstleistungen mehrerer Unternehmen oder sogar verschiedene Verkehrsmittel in Anspruch genommen werden, hat er mehrere Nutzermedien mit sich zu führen. Dies verringert jedoch den Nutzungskomfort erheblich. Ebenso ergeben sich relativ hohe Investitionskosten für den Betreiber des Dienstleistungssystems, welche sich auch auf die Nutzungskosten für den Nutzer auswirken.

Daher ist es die Aufgabe der vorliegenden Erfindung, ein Verfahren zur automatischen Erfassung von Nutzungsinformationen betreffend die Nutzung eines Dienstleistungssystems durch einen Nutzer mit einem Nutzermedium zu schaffen, welches einen höheren Komfort bietet und mit geringeren Kosten verbunden ist.

Zur Lösung dieser Aufgabe schlägt die Erfindung vor, dass das Dienstleistungssystem ein Funksignal mit Nutzungsinformationen aussendet, wobei eine auf dem Nutzermedium installierte Applikation das Funksignal erkennt, die Nutzungsinformationen aus dem Funksignal extrahiert und Nutzungsdaten an das Dienstleistungssystem zurückübermittelt.

Durch die erfindungsgemäße Ausgestaltung ist es nun möglich, dass der Nutzer des Dienstleistungssystems kein spezielles Nutzermedium mehr mit sich führen muss. Stattdessen lassen sich auf dem Nutzermedium eine oder auch mehrere Applikationen installieren, welche dann zur Nutzung verschiedener Dienstleistungssysteme, auch solche von verschiedenen Betreibern, genutzt werden können. Das Dienstleistungssystem sendet dabei ein Funksignal, welches nach einem allgemein verbreiteten Standard aufgebaut ist. Anhand der auf dem Nutzermedium installierten Applikation kann ein für das Dienstleistungssystem relevantes Funksignal durch seinen Aufbau erkannt werden. Anschließend kann die Applikation beispielsweise automatisch eine Verbindung zwischen Nutzermedium und Dienstleistungssystem herstellen. Jedoch kann es alternativ auch vorgesehen sein, dass der Nutzer manuell die Benutzung des Dienstleistungssystems zu bestätigen hat, oder dass bei Registrierung auf anderem Wege erfolgt, ohne dass sich Nutzermedium und Dienstleistungssystem direkt verbinden. Nach der Registrierung werden die relevanten Nutzungsinformationen von der Applikation aus dem Funksignal extrahiert und als Nutzungsdaten, welche beispielsweise den Nutzungszeitpunkt, eine Nutzungs-ID, die Nutzungsdauer, die Nutzungsart und/oder Tarifinformationen enthalten, an das Dienstleistungssystem oder an ein Hintergrundsystem zurückübermittelt. Diese Rückübermittlung kann je nach Ausführung auch zeitversetzt zur Nutzung- auch nach der Nutzung-erfolgen.

Durch optionale, zeitlich periodisch von dem Nutzermedium an das Dienstleistungssystem übertragene Nutzungsdaten kann das Dienstleistungssystem erkennen, dass der Nutzer sich noch im Dienstleistungssystem befindet.

Anhand der gesamten vom Nutzermedium an das Dienstleistungssystem übermittelten Nutzungsdaten lässt sich leicht eine automatische Abrechnung der genutzten Dienstleistungen erstellen. Dadurch bekommt der Nutzer lediglich eine Rechnung über eine Anzahl genutzter Dienstleistungen und muss nicht für jede Nutzung jeweils einzeln eine Abrechnung begleichen.

Die Erfindung sieht vor, dass das Nutzermedium ein mobiles Endgerät des Nutzers ist. Besonders vorteilhaft ist das Nutzermedium als Smartphone. Dadurch nutzt die Erfindung die Gegebenheit, dass die Nutzer der Dienstleistungssysteme bereits in hohem Maße mobile Endgeräte, insbesondere Smartphones, bei sich tragen.

Marktübliche Smartphones verfügen zum einen über die Möglichkeit, spezifische Applikationen (Apps) auf diesen Geräten durch den Nutzer zu installieren. Zum anderen können die in Funknetzen verfügbaren Informationen leicht und schnell gescannt, erkannt, ausgewertet und gespeichert werden. Beispielsweise können Smartphones die sogenannte Service-Set-Identification (SSID), die nach dem weltweit verbreiteten Standard "IEEE-802.11" einen frei wählbaren Namen eines solchen Funknetzes ermöglicht, in allen verfügbaren WLAN-Netzen erkennen und speichern.

Das Funksignal des Dienstleistungssystems sendet unter anderem Informationen über die SSID, die unterstützten Übertragungsraten und die Art der Verschlüsselung aus. Um aus der hohen Anzahl existenter WLANs schnell, einfach und zuverlässig die SSIDs herauszufiltern, welche für das jeweilige Dienstleistungssystem relevant sind, wird die aus beispielsweise 32 Bytes zusammengesetzte SSID gemäß definierter Merkmale verschlüsselt aufgebaut. Die auf dem Nutzermedium befindliche Applikation erkennt mittels der Hardware des Smartphones relevante WLAN-Netze über deren SSIDs. Zusätzlich kann anhand der SSIDs leicht erkannt werden, an welcher Station des Dienstleistungssystems, beispielsweise an welcher Haltestelle oder in welcher Linie eines Verkehrsmittels sich der Nutzer befindet.

Die Erfindung sieht zusätzlich vor, dass die Applikation aus empfangenen Geodaten den Aufenthaltsort des Nutzermediums ermittelt. Dabei kann die Applikation zusätzlich den aus den Geodaten ermittelten Aufenthaltsort des Nutzermediums örtlich mit Stationen des Dienstleistungssystems vergleichen. Ein solcher Vergleich ist dort sinnvoll, wo ein bestimmtes Verkehrsmittel einem definierten Plan folgt, das heißt beispielsweise Busse, S-Bahnen, U-Bahnen etc. Dadurch kann verifiziert werden, dass sich der Aufenthaltsort des Nutzers in etwa mit dem Fahrplan des Verkehrsmittels deckt. Hierdurch werden fehlerhafte Nutzungsdaten zuverlässig verhindert.

Ein Ausführungsbeispiel der Erfindung wird im Folgenden näher erläutert:

Zur Anwendung des erfindungsgemäßen Verfahrens werden Verkehrsmittel, wie zum Beispiel Busse des öffentlichen Nahverkehrs, mit einem Access Point für ein lokales Funknetz gemäß Standard IEEE-802.11, das heißt ein WLAN-Netz, ausgerüstet. Dieser Access Point sendet für WLAN-Netze übliche Informationen, wie die SSID, eine Liste unterstützter Übertragungsraten, und eine Information über die Art der Verschlüsselung aus. Um aus der Vielzahl vorhandener WLAN-Netze schnell, einfach und zuverlässig diejenigen SSIDs herauszufiltern, welche für das jeweilige Dienstleistungssystem relevant sind, wird die aus mehreren Bytes bestehende SSID mit einer definierten Struktur aufgebaut.

Auf dem Smartphone des Nutzers ist eine Applikation installiert, die mittels der Hardware des Smartphones die WLAN-Netze über deren SSIDs als relevant erkennen kann. Folglich erkennt die Applikation des Smartphones beim Aufenthalt im Bus eine SSID, deren Struktur den vom Dienstleistungssystem vorgegebenen Merkmalen entspricht und damit eine abrechnungsrelevante Dienstleistung repräsentiert. Die Applikation stellt daraufhin eine Verbindung mit dem Access Point des Verkehrsmittels her, dessen Verschlüsselungsparameter die Applikation bereits durch im Vorfeld von dem Dienstleistungssystem erhaltene Informationen kennt. Durch die Herstellung der Verbindung mit dem Access Point registriert die Applikation des Smartphones den Beginn der Nutzung des Dienstleistungssystems im Bus. Anhand der Struktur der SSID wird erkannt, in welcher Buslinie sich der Nutzer befindet. Optional kann der Nutzer die Einstellung so wählen, dass er den Nutzungsbeginn der Dienstleistung manuell quittiert. Andernfalls erfolgt die Registrierung des Nutzers im Dienstleistungssystem automatisch.

Zusätzlich zur bestehenden Funkverbindung zwischen dem Access Point des Verkehrsmittels und der Applikation des Smartphones erkennt die Applikation eine Veränderung des Aufenthaltsortes des Nutzers über die Geolokationsfunktion des Smartphones, zum Beispiel GPS- oder Mobilfunknetze. Es erfolgt ein Vergleich, ob sich der Aufenthaltsort des Smartphones innerhalb der fahrplangemäßen Strecke der Buslinie befindet.

Die Applikation erkennt die Nutzung der Dienstleistung so lange, bis der Nutzer das Dienstleistungssystem verlässt und dabei die Verbindung zum Access Point abbricht. Während der Durchführung des Verfahrens speichert die Applikation stetig die genutzten Dienstleistungen und übermittelt diese in regelmäßigen Abständen an das Dienstleistungssystem, welches dann die automatisierte Abrechnung für den Nutzer erstellt.

## Patentansprüche

1. Verfahren zur automatischen Erfassung von Nutzungsinformationen betreffend die Nutzung eines Dienstleistungssystems durch einen Nutzer mit einem Nutzermedium, wobei das Dienstleistungssystem ein Funksignal mit Nutzungsinformationen aussendet und wobei eine auf dem Nutzermedium installierte Applikation das Funksignal erkennt, die Nutzungsinformationen aus dem Funksignal extrahiert und Nutzungsdaten an das Dienstleistungssystem zurückübermittelt.

2. Verfahren nach Anspruch 1, **dadurch gekennzeichnet, dass** das Nutzermedium ein mobiles Endgerät des Nutzers ist.

3. Verfahren nach Anspruch 1 oder 2, **dadurch gekennzeichnet, dass** das Nutzermedium ein Smartphone ist.

4. Verfahren nach einem der vorhergehenden Ansprüche, **dadurch gekennzeichnet, dass** die Applikation aus empfangenen Geodaten den Aufenthaltsort des Nutzermediums ermittelt.

5. Verfahren nach Anspruch 4, **dadurch gekennzeichnet, dass** die Applikation den aus den Geodaten ermittelten Aufenthaltsort des Nutzermediums örtlich mit Stationen des Dienstleistungssystems vergleicht.

6. Verfahren nach einem der vorhergehenden Ansprüche, **dadurch gekennzeichnet, dass** das durch das Dienstleistungssystem ausgesandte Funksignal Informationen über Nutzungszeitpunkt, Nutzungs-ID, Nutzungsdauer, Nutzungsart und/oder Tarifinformationen enthält.

7. Verfahren nach einem der vorhergehenden Ansprüche, **dadurch gekennzeichnet, dass** das Nutzermedium die Nutzungsdaten zeitlich periodisch an das Dienstleistungssystem überträgt.

8. Verfahren nach einem der vorhergehenden Ansprüche, **dadurch gekennzeichnet, dass** die Applikation eine Beendigung der Nutzung des Dienstleistungssystems anhand einer Beendigung der Verbindung zwischen Nutzermedium und Dienstleistungssystem erkennt.

9. Verfahren nach einem der vorhergehenden Ansprüche, **dadurch gekennzeichnet, dass** das Dienstleistungssystem anhand der vom Nutzermedium übermittelten Nutzungsdaten automatisch eine Abrechnung über die genutzten Dienstleistungen erstellt.

10. Verfahren nach einem der vorhergehenden Ansprüche, **dadurch gekennzeichnet, dass** das Dienstleistungssystem ein öffentlicher Verkehrsbetrieb ist.

## Geänderte Patentansprüche

### Geänderte Patentansprüche gemäss Regel 137(2) EPÜ.

**1.** Verfahren zur automatischen Erfassung von Nutzungsinformationen betreffend die Nutzung eines Dienstleistungssystems durch einen Nutzer mit einem Nutzermedium, wobei das Dienstleistungssystem ein Funksignal mit Nutzungsinformationen aussendet und wobei eine auf dem Nutzermedium installierte Applikation das Funksignal erkennt, die Nutzungsinformationen aus dem Funksignal extrahiert und Nutzungsdaten an das Dienstleistungssystem zurückübermittelt, wobei das Nutzermedium ein Smartphone ist.

**2.** Verfahren nach Anspruch 1, **dadurch gekennzeichnet, dass** das Nutzermedium ein mobiles Endgerät des Nutzers ist.

**3.** Verfahren nach einem der vorhergehenden Ansprüche, **dadurch gekennzeichnet, dass** die Applikation aus empfangenen Geodaten den Aufenthaltsort des Nutzermediums ermittelt.

**4.** Verfahren nach Anspruch 3, **dadurch gekennzeichnet, dass** die Applikation den aus den Geodaten ermittelten Aufenthaltsort des Nutzermediums örtlich mit Stationen des Dienstleistungssystems vergleicht.

**5.** Verfahren nach einem der vorhergehenden Ansprüche, **dadurch gekennzeichnet, dass** das durch das Dienstleistungssystem ausgesandte Funksignal Informationen über Nutzungszeitpunkt, Nutzungs-ID, Nutzungsdauer, Nutzungsart und/oder Tarifinformationen enthält.

**6.** Verfahren nach einem der vorhergehenden Ansprüche, **dadurch gekennzeichnet, dass** das Nutzermedium die Nutzungsdaten zeitlich periodisch an das Dienstleistungssystem überträgt.

**7.** Verfahren nach einem der vorhergehenden Ansprüche, **dadurch gekennzeichnet, dass** die Applikation eine Beendigung der Nutzung des Dienstleistungssystems anhand einer Beendigung der Verbindung zwischen Nutzermedium und Dienstleistungssystem erkennt.

**8.** Verfahren nach einem der vorhergehenden Ansprüche, **dadurch gekennzeichnet, dass** das Dienstleistungssystem anhand der vom Nutzermedium übermittelten Nutzungsdaten automatisch eine Abrechnung über die genutzten Dienstleistungen erstellt.

**9.** Verfahren nach einem der vorhergehenden Ansprüche, **dadurch gekennzeichnet, dass** das Dienstleistungssystem ein öffentlicher Verkehrsbetrieb ist.
